(19) Europäisches Patentamt
European Patent Office
Office européen des brevets

(11) EP 1 010 727 A2

# (12) EUROPEAN PATENT APPLICATION

(43) Date of publication:
**21.06.2000 Bulletin 2000/25**

(51) Int. Cl.$^7$: **C08L 83/06**

(21) Application number: **99125144.8**

(22) Date of filing: **16.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.12.1998 US 112609 P**

(71) Applicant: **RHODIA INC.**
**Cranbury, New Jersey 08512-7500 (US)**

(72) Inventors:
- **Behnam, Basil A.**
**Mississauga, Ontario L5A2E9 (CA)**
- **Ellison, James**
**Blackstock, SC 29014 (US)**
- **Kerr III, R. Stuart**
**Rock Hill, SC 29732 (US)**
- **Pinto, Olivier**
**01380 Saint Cyr sur Menthon (FR)**

(74) Representative: **Dubruc, Philippe**
**RHODIA SERVICES**
**Direction de la Propriété Industrielle**
**25, quai Paul Doumer**
**92408 Courbevoie Cédex (FR)**

## (54) Release composition

(57) A composition of matter comprising:

(a) 100 parts by weight of a curable epoxypolyorganosiloxane having an epoxy content of between about 8 to about 15 percent and a molecular weight of between about 4000 to about 50000 daltons;

(b) 0.1 to 20 parts by weight of curable epoxypolyorganosiloxane having an epoxy content of between about 0.5 to about 3.0 percent and a molecular weight of between about 20000 to about 80000 daltons; and

(c) 0.1 to 5 parts by weight of a curing agent, which, upon exposure to actinic radiation is capable of curing components (a) and (b);

and wherein said composition demonstrates surface release properties when coated and cured onto a substrate is provided. The composition is particularly useful in articles of manufacture where release properties are desired.

EP 1 010 727 A2

## Description

Background of the Invention

1. Field of the Invention

This invention relates to release surfaces useful for release liners and adhesive contacting release surfaces for self-wound tapes among other applications. More specifically, the invention combines the use of two different types of cationically curable epoxypolyorganosiloxane compositions to yield a material which demonstrates superior release properties.

2. Technology Description

A major utility of the invention concerns an improved release liner (or backing) for use in combination with a pressure-sensitive adhesive layer and a face stock preferably for label applications. In such combinations, the release liner protects the pressure-sensitive adhesive (PSA) prior to the label being used and is removed immediately prior to application of the label to another surface.
Additionally, the release liner serves to facilitate cost effective manufacture of rolls or sheets of labels. It also functions as a carrier of labels for dispensing in automatic labeling operations and for computer printing in EDP applications. The performance attributes of a release liner are critical to both the manufacture and end-use application of pressure sensitive adhesive labels.

In conventional practice, the release liner is provided as a silicone layer on a support layer having high holdout, i.e., the support layer on which the silicone layer is deposited is resistant to silicone penetration. Where the support layer is paper, a special and, therefore, expensive paper, such as a super-calendered or densified glossy paper, is required. One currently accepted way of applying a silicone release composition to a high-holdout support layer is by solvent coating. Growing concern over the environment has imposed stringent restrictions regarding recovery of the solvent used in applying the solvent based silicone to the high-holdout backing paper or other materials.

An alternative to this is to use 100% solids silicone release compositions. These are supplied with a viscosity (usually < 2000 cps) suitable for roll-coating techniques. Application of these to porous substrates such as low cost papers, machine finished (MF) or machine glazed (MG) papers, finds these materials to soak into the paper (penetrate the paper surface) to give ineffective coverage of the paper fibers unless excessively high quantities of expensive silicone are used. Ineffective coverage of the paper fibers provides unsuitable release liners for PSA applications especially where high speed convertibility is an essential performance feature.

A major application for a release liner is as part of bulk rolls of laminate consisting of the release liner, a face stock between which there is contained an inherently tacky self-adhesive, or pressure-sensitive adhesive. The adhesive may be permanent or repositionable. The rolls are converted by printing label information on the face stock, die cutting the labels through the face stock and adhesive to the surface of the release liner, followed by removal of the matrix surrounding the labels thus leaving a plurality of labels on the release liner.

It is important that the force required for release be sufficiently low for the intended application, but not so low that the die cut labels will release or predispense from a moving web turning a corner or remove with the waste matrix during its removal. The release force should also be not so high that the matrix is broken during its removal.

It is known to this art to prepare antiadhesive coating compositions for use in the above-described technical fields based on a polyorganosiloxane containing functional groups (of the epoxy or vinyl ether type, and the like) to which a polymerization initiator, such as an onium salt is added for the crosslinking thereof. Examples of patent literature which disclose such coating compositions are in contained in U.S. Pat. Nos. 4,313,988; 4,450,360; 4,576,999; and 4,640,967.

Of particular interest are antiadhesive coating compositions based upon epoxy-functional polysiloxane chemistry because of their ease of use and ability to crosslink and form an excellent release surface when exposed to ultraviolet radiation. Irradiation crosslinking technology has decisive advantages when compared with conventional thermal based systems such as very rapid cure rates, the absence of solvents, the possibility of operating at ambient temperature and therefore on heat sensitive substrates, and the use of minimal maintenance coating machines leading to reduced operating costs. In addition, these materials are capable of being used with reduced toxicity and excellent long term stability of release properties.

The use of various control release modifiers for silicone polymers are disclosed in the following patent publications: US 5,310,601; US 5,158,991; US 5,468,828; US 5,468,816; and EP 0108208. The modifiers are alleged to assist in the functional properties of the final coating compositions. Typically what has been proposed is to utilize a modifier which has a similar functionality to the silicone polymer. For example, in the field of vinyl silicone polymers, the release modifiers suggested have been so called MQ resins which have been modified to have a vinyl functionality. This

is suggested in EP 0108208. In the field of epoxypolyorganosiloxane polymers, the release modifiers suggested have had an epoxy functionality. For example, U.S. Patent Nos. 5,310,601 and 5,158,991 include modifiers which contain epoxy functional organic radicals containing between about 2 and about 20 carbon atoms.

Despite the above advances associated with release coatings, and in particular those based upon epoxy-functional polysiloxane chemistry, there still exists a need in the art for products having even better release properties than previously expected, particulalry in terms of antifriction properties. The invention at hand utilizes a minor amount of an additional epoxypolyorganosiloxane polymer having a much higher molecular weight and much lower epoxy content which is added to a major amount of an epoxypolyorganosiloxane polymer to yield a resulting composition, which, when cured, yields outstanding release properties, particularly in terms of antifriction properties.

Brief Summary of the Invention

In accordance with the present invention a novel composition useful in providing excellent release properties is provided. More specifically, the composition includes two different types of curable epoxy-functional siloxanes to yield a blend composition, which, when cured onto a substrate demonstrates excellent release properties with unexpectedly superior antifriction properties as compared to the use of either composition alone, or a theoretical composition which would represent the arithmetic average of the molecular weight and epoxy content of the blend composition.

In accordance with one embodiment, the present invention comprises a composition of matter comprising:

(a) 100 parts by weight of a curable epoxypolyorganosiloxane having an epoxy content of between about 8 to about 15 percent and a molecular weight of between about 4000 to about 50000 daltons;

(b) 0.1 to 20 parts by weight of curable epoxypolyorganosiloxane having an epoxy content of between about 0.5 to about 3.0 percent and a molecular weight of between about 20000 to about 80000 daltons; and

(c) 0.1 to 5 parts by weight of a curing agent, which, upon exposure to actinic radiation is capable of curing components (a) and (b);

wherein said composition demonstrates surface release properties when coated and cured onto a substrate.

Particularly preferred embodiments include the use of polydimethylsiloxane polymers functionalized by epoxy groups, more specifically, β-(3,4-epoxycyclohexyl)ethyl groups as the curable epoxypolyorganosiloxanes, and having substantially different epoxy levels and molecular weights.

Another embodiment of the present invention comprises a process for rendering a surface abherent by coating the above composition onto a surface of a substrate and thereafter applying actinic radiation to cure said composition onto the substrate.

Yet another embodiment of the present invention comprises a substrate having a release surface wherein the release surface is obtained by coating and curing the above-defined composition onto a surface of the substrate. In commercial applications, the substrate may be used in connection with adhesive tapes, labels, diaper tabs, packaging materials, and the like.

An object of the present invention is to provide a composition having excellent controlled release and antifriction properties.

Still another object of the present invention is to provide a process for rendering a surface abherent by the application and curing of a novel release composition.

A further object of the present invention is to provide a substrate having a release surface formed by a novel release composition.

These, and other objects, will readily be apparent to those skilled in the art as reference is made to the description of the preferred embodiments.

Detailed Description of the Preferred Embodiments

In describing the preferred embodiments, certain terminology will be utilized for the sake of clarity. Such terminology is intended to encompass the recited embodiment, as well as all technical equivalents which operate in a similar manner for a similar purpose to achieve a similar result.

The present invention includes a multicomponent composition which, when applied to a surface on a substrate and exposed to actinic radiation, cures on the substrate to form a release surface.

The first component of the composition is a curable epoxypolyorganosiloxane having an epoxy content of between about 8 to about 15 percent and a molecular weight of between about 4000 to about 50000 daltons. The crosslinkable polyorganosiloxanes which comprise the compositions of the invention are substituted by functional

groups of the epoxy type.
Such polyorganosiloxanes are linear or substantially linear and comprise recurring structural units of formula (I) and endgroups of formula (II), or are cyclic and comprise recurring structural units of formula (I)

$$\begin{array}{c} R' \\ \text{-(-Si - O-)-} \\ Y \end{array} \qquad (I) \qquad\qquad \begin{array}{c} R' \\ \text{Y-Si-O-} \\ R' \end{array} \qquad (II)$$

in which formulae the symbols R', which may be identical or different, are each a $C_1$-$C_6$ linear or branched alkyl radical, which is optionally substituted (3,3,3-trifluoropropyl, for example), a $C_5$-$C_8$ cycloalkyl radical, an aryl (especially phenyl) radical, a substituted aryl (dichlorophenyl, for example) radical and the like, at least 60 molar % of the radicals R' being methyl radicals; and the symbols Y which may be identical or different, are each as defined for R' or a cationically crosslinkable functional organic radical, such as the epoxyfunctional groups, said epoxide, vinyl ether and the like functional groups being bonded to an atom of the silicone chain via a divalent bridge having from 2 to 20 carbon atoms; with the proviso that at least one of the symbols Y is a crosslinkable functional organic radical, and preferably from 1 to 10 functional organic radicals per mole of polymer.

The epoxypolyorganosiloxanes are described, especially, in US 4,046,930, DE-A-4,009,899, EP-A-396,130, EP-A-355,381,EP-A-105,341, FR-A-2,110,115 and FR-A-2,526,800. To the extent necessary for completion, these references are expressly incorporated by reference.

The epoxyfunctional polyorganosiloxanes can be prepared by a hydrosilylation reaction between oils containing Si-H structural units and epoxyfunctional compounds such as 4-vinylcyclohexene oxide, allyl glycidyl ether and the like.

Particularly preferred are epoxypolyorganosiloxanes of formula (III)

$$R_2R^2SiO(RR^1SiO)_x(R_2SiO)_y(RHSiO)_zSiR^2R_2 \qquad (III)$$

wherein R is individually a lower alkyl radical having from 1 to about 8 carbon atoms; $R^1$ individually is a monovalent cycloaliphatic epoxy-functional organic radical having from 2 to about 20 carbon atoms; $R^2$ is individually a lower alkyl radical having from 1 to about 8 carbon atoms or a monovalent cycloaliphatic epoxy-functional organic radical having from 2 to about 20 carbon atoms; "x" is a number ranging from about 1 to about 50; "y" is a number ranging from about 1 to about 1000; and "z" is a number ranging from about 0 to about 5.

In a particularly preferred embodiment, each R represents a methyl group, $R^1$ represents a β-(3,4-epoxycyclohexyl)ethyl group of the following formula

**a)** 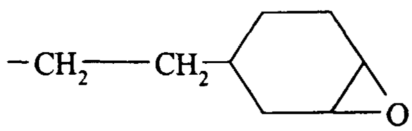

each $R^2$ represents a methyl group, x is a number between about 1 and about 10; y is a number between about 20 and about 150; and z is a number between about 0 and about 2. In even more preferred embodiments, R, $R^1$ and $R^2$ are as defined above, x is between about 3 and about 9, y is between about 100 and 150 and z is 0.

Other structures which may advantageously be selected as the epoxy functional group include the following:

b) 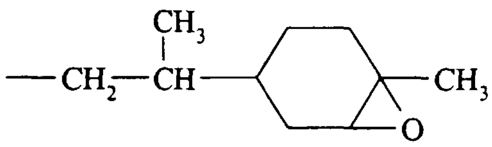

c) 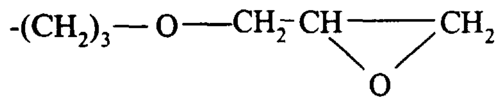

and/or

d) 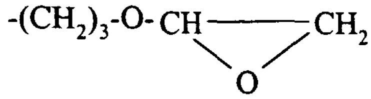

The epoxypolyorganosiloxanes are generally provided in the form of fluids exhibiting a viscosity at 25° C of 10 to 10,000 $mm^2/s$ and preferably from 100 to 600 $mm^2/s$. The molecular weight of the epoxypolyorganosiloxane is between about 4000 to about 50,000 daltons, more preferably between about 10,000 and about 25,000 daltons. The use of lower weight materials are preferred because of handling performance and versatility of application (i.e., 100% solids or solution coatings can be used.)

A commercial example of an epoxypolyorganosiloxane suitable for use in connection with the present invention is sold under the trade designation Silcolease® PC-600 by Rhodia Inc.

In practice the amount of the first type of epoxypolyorganosiloxane comprises between about 80 to about 99.9 percent by weight of the coating composition prior to cure. In more preferred embodiments the amount of the epoxypolyorganosiloxane comprises between about 90 to about 99 percent by weight of the coating composition prior to cure.

The second component of the novel composition of the present invention comprises an epoxyorganosiloxane having an epoxy content of between about 1.0 to about 1.5 curable epoxypolyorganosiloxane percent and a molecular weight of between about 25000 to about 80000 daltons. This second type of epoxypolyorganosiloxane may take the chemical form as is set forth in Formula (III) above, but varying in the epoxy content as compared to the first type of epoxypolyorganosiloxane.

The amount of this second type of epoxypolyorganosiloxane will comprise between about 0.1 to about 20 percent by weight of the coating composition prior to cure. In more preferred embodiments the amount of this second type of epoxypolyorganosiloxane comprises between about 1 to about 10 percent by weight of the coating composition prior to cure.

The next component of the composition comprises a curing agent, which, upon exposure to actinic radiation is capable of curing the above discussed epoxypolyorganosiloxanes. Preferred is the use of onium salts as curing agents.

Suitable onium borate initiators are discussed in U.S. Patent Nos. 5,340,898 and 5,468,902. To the extent necessary for completion, these references are expressly incorporated by reference. As set forth in these patents, a particularly preferred combination includes the use of a catalytically effective amount of an onium borate of an element selected from among Groups 15 to 17 of the Periodic Table [Chem. & Eng. News, Vol. 63, No. 5, 26; 4 February 1985]; the cationic moiety of said onium borate being selected from among:

(1) the onium salts having the formula (IV):

$$[(R')_n\text{-}A\text{-}(R'')_m]^+ \qquad \text{(IV)}$$

in which A is an element from Groups 15 to 17, such as I, S, Se, P, N and the like; R' is a $C_6$-$C_{20}$ heterocyclic or carbocyclic aryl radical, said heterocyclic radical containing at least one of the heteroelements, nitrogen, sulfur, and the like; R" is R' or a linear or branched, $C_1$-$C_{30}$ alkenyl or alkyl radical, said radicals R' and R" optionally being substituted by a $C_1$-$C_{25}$ alkoxy, C1-C25 alkyl, nitro, chloro, bromo, cyano, carboxyl, mercapto group and the like; n is an integer ranging from 1 to v + 1, with v being the valence of the element A; and m is an integer ranging from 0 to v-1 with n + m = v + 1 ; and

(2) oxoisothiochromanium salts of the following formula:

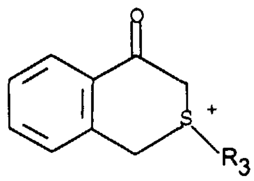

wherein R3 represents a linear or branched alkyl group containing between 1 and about 20 carbon atoms, linear or branched alkyl group containing between 1 and about 20 carbon atoms, or an aryl group;
and the anionic borate moiety having the formula:

$$[BX_aR'''_b]^-$$

which a and b are integers ranging from 0 to 4 with a + b = 4 ; the symbols X are each a halogen atom (chlorine or fluorine) with a = 0 to 3, or an OH functional group with a = 0 to 2;
and the symbols R''', which may be identical or different, are each a phenyl radical substituted by at least one electron-withdrawing group, such as $CF_3$, $NO_2$, CN and the like, or by at least two halogen atoms (most particularly fluorine), or an aryl radical containing at least two aromatic ring members, such as biphenyl, naphthyl and the like, and optionally substituted by at least one electron-withdrawing element or group, especially a halogen atom (most particularly fluorine), $CF_3$, $NO_2$, CN and the like.

Advantageously, the anionic borate species is chosen from the following anions:

| | |
|---|---|
| $[B(C_6F_5)_4]^-$ $[B(C_6H_4CF_3)_4]^-$<br>$[(C_6F_5)_2BF_2]^-$ $[B(C_6H_4OCF_3)_4]^-$ | $[B(C_6H_3(CF_3)_2)_4]^-$<br>and $[B(C_6H_3F_2)_4]^-$ |

The onium salts having the formula (IV) are described in the literature, patent and otherwise, for example in U.S. Pat. Nos. 4,026,705, 4,032,673, 4,069,056, 4,136,102 and 4,173,476.
The following cations, wherein ϕ is phenyl, are representative:

| | |
|---|---|
| $[(\Phi)_2 I]^+$<br>$[C_{12}H_{25}\text{-}\Phi\text{-}I\text{-}\Phi]^+$<br>$[(\Phi)_3 S]^+$<br>$[\Phi\text{-}S\text{-}\Phi\text{-}S\text{-}(\Phi)_2]^+$<br>$[CH_3\text{-}\Phi\text{-}I\text{-}\Phi\text{-}CH(CH_3)_2]^+$<br>and $[(\Phi)_2S\text{-}\Phi\text{-}S\text{-}\Phi\text{-}S(\Phi)_2]^{+2}$ | $[C_8H_{17}\text{-}O\text{-}\Phi\text{-}I\text{-}\Phi]^+$<br>$[(C_8H_{17}\text{-}O\text{-}\Phi)_2 I]^+$<br>$[(\Phi)_2\text{-}S\text{-}\Phi\text{-}O\text{-}C_8H_{17}]^+$<br>$[(C_{12}H_{25}\text{-}\Phi)_2 I]^+$<br>$[CH_3\text{-}\Phi\text{-}I\text{-}\Phi\text{-}CH_3]^+$ |

In accordance with the invention, the initiators which will be used more particularly are the following onium borates:

| | |
|---|---|
| $[(\Phi\text{-}CH_3)_2 I]^+$, $[B(C_6F_5)_4]^-$ , | $[(\Phi)_2 I]^+$, $[B(C_6F_5)_4]^-$, |
| $[C_{12}H_{25}\text{-}\Phi\text{-}I\text{-}\Phi]^+$, $[B(C_6F_5)_4]^-$, | $[(C_8H_{17}\text{-}O\text{-}\Phi\text{-}I\text{-}\Phi]^+$, $[B(C_6F_5)_4]^-$, |
| $[(C_8H_{17}\text{-}O\text{-}\Phi)_2 I]^+$, $[B(C_6F_5)_4]^-$, | $[(\Phi)_2 I]^+$, $[B(C_6H_3(CF_3)_2)_4]^-$, |
| $[(\Phi)_2S\text{-}\Phi\text{-}O\text{-}C_8H_{17}]^+$,$[B(C_6H_4CF_3)_4]^-$, | $[(C_{12}H_{25}\text{-}\Phi)_2I]^+$, $[B(C_6F_5)_4]^-$, |

(continued)

| | |
|---|---|
| $[CH_3\text{-}\Phi\text{-}I\text{-}\Phi\text{-}CH(CH_3)_2]^+[B(C_6F_5)_4]^-$, | $[(\Phi)_3 S]^+$, $[B(C_6F_5)_4]^-$, |
| $[CH_3\text{-}\Phi\text{-}I\text{-}\Phi\text{-}CH(CH_3)_2]^+[B(C_6H_4OCF_3)_4]^-$, and | $2[B(C_6F_5)_4]^-$,$[(\Phi)_2S\text{-}\Phi\text{-}S\text{-}\Phi\text{-}S(\Phi)_2]^{+2}$ |

When the cationic portion is of formula (2) it is preferably the 2-ethyl-4-oxoisothiochromanium or 2-dodecyl-4-oxoisothiochromanium salt.

The onium borates according to the present invention can be prepared by an exchange reaction between a salt of the cationic moiety, especially a halide (chloride, iodide), and an alkali metal salt (sodium, lithium or potassium) of the anionic moiety.

The operating conditions (respective amounts of reactants, choice of solvents, duration, temperature, stirring and the like) are easily determined by one skilled in this art; they must permit recovery of the desired initiator salt in the solid state, by filtration of the precipitate formed, or in the oily state, by extraction using a suitable solvent.

The alkali metal salts of the anionic moiety can be prepared in known manner, by an exchange reaction between a haloborated compound and an organometallic compound (of magnesium, lithium, tin and the like) bearing the desired hydrocarbon groups, in a stoichiometric amount, optionally followed by a hydrolysis using an aqueous solution of an alkali metal halide; this type of synthesis is, for example, described in J. of Organometallic Chemistry, Vol. 178, p. 1-4 (1979); J.A.C.S., 82, 5298 (1960); Anal. Chem. Acta, 44, 175-183 (1969); U.S. Pat. No. 4,139,681 and DE-A-2,901,367; Zh. Org. Khim., Vol. 25, No. 5-pages 1099-1102 (May 1989).

Other cationic photoinitiators can alternatively be selected for use.

The curing agent is present in an amount of about 0.1 to about 5 percent by weight of the composition with amounts of 0.2 percent to about 2.0 percent being more preferred.

The compositions according to the invention can additionally contain other additives and adjuvants, such as adherence modulators (linear silicone polymers or resins bearing vinyl, epoxy, vinyl ether, alcohol and the like functional groups), pigments, photosensitizing agents, fungicides, bactericides, stabilizers and antimicrobial agents, corrosion inhibitors and the like.

The compositions according to the invention can be used as such or in solution in an organic solvent. They are useful for providing antiadherent coatings on cellulosic materials, films, paints, encapsulation of electrical and electronic components, coatings for textiles and for sheathing optical fibers.

The inventive composition is used to produce a coating for a material, such as metal sheet, glass, plastic or paper that is nonadherent to other materials which it would normally adhere. The composition advantageously exhibits a viscosity not exceeding 2,000 mPa.s.

Thus, the present invention also features a process for the production of articles (sheets for example) that are nonadherent to surfaces to which they normally adhere, comprising coating an amount of the subject composition, generally from 0.1 to 5 g per $m^2$ , onto at least one face surface thereof, and crosslinking the composition by supplying actinic radiation (i.e., visible light, ultraviolet or electron beam radiation). The type of radiation source utilized is directly correlated to the curing agent selected. In preferred embodiments, when using initiators which liberate hydrogen proton cations upon exposure to ultraviolet radiation, the radiation source selected should be an ultraviolet wave source.

The preferred ultraviolet radiation used has a wavelength of from 200 to 400 nanometers, preferably from 230 to 360 nanometers.

The duration of irradiation can be short and it is generally less than 1 second and is on the order of a few hundreds of a second for very thin coatings.

The crosslinking attained is excellent even in the absence of any heating. Nonetheless, heating at a temperature of from 25° C. to 100° C. is also within the scope of the invention.

It will of course be appreciated that the hardening time, especially, can be adjusted, by the number of ultraviolet lamps used, by the duration of exposure to ultraviolet radiation and by the distance between the composition and the ultraviolet lamp.

The solvent-free compositions are applied with the aid of devices capable of uniformly depositing small amounts of liquids onto a surface. For example, Gravure type or multi-roll coaters may be selected. Use of any suitable coating apparatus is deemed to be within the skill of the artisan.

The amounts of composition deposited onto the substrates are variable and typically range from 0.1 to 5 $g/m^2$ of treated surface. These amounts depend on the nature of the substrates and on the desired antiadherent properties. They usually range from 0.5 to 3 $g/m^2$ for nonporous substrates.

The present invention also features the final articles (sheets for example) comprising a solid material (metal, glass, plastic, paper, foil and the like), at least one face surface of which is coated with a composition as described above, which composition is photocrosslinked or crosslinked by actinic radiation.

While a primary application of the invention is for single or double coated release liners for tapes, labels or personal care items (e.g., diapers), other applications include: embossing strip release liners, protective release surfaces for floor tiles and wall coatings, release papers for low pressure plastic laminates, release materials for interleaves, release materials for self-sealing roofing, bakery tray liners, and like applications where a release surface of some definite value exists.

While not wishing to be bound to any specific scientific theory, the inventors have surprisingly discovered that the addition of the minor amount of the second epoxypolyorganosiloxane to the first, significantly enhances the overall coating composition properties, particularly in terms of friction. For many applications it is highly desirable that the coefficient of friction of the resulting coating be minimized. While not knowing precisely why the second epoxypolyorganosiloxane functions to dramatically reduce the friction of the overall coating, it clearly demonstrates such properties.

In accordance with the present invention, the compositions are able to provide release values on the order of between about 5 to about 500 grams per linear inch at pull rates of about 12 inches to 1200 inches per minute. In addition, the selected materials are extremely stable over time and typically demonstrate Keil-aging release of less than a 50% increase. The compositions also demonstrate a very low percentage of extractables, with amounts of less than 5.0 percent occurring.

The invention is described in greater detail by the following non-limiting examples.

Comparative Example 1

To 100 parts of the following epoxypolyorganosiloxane

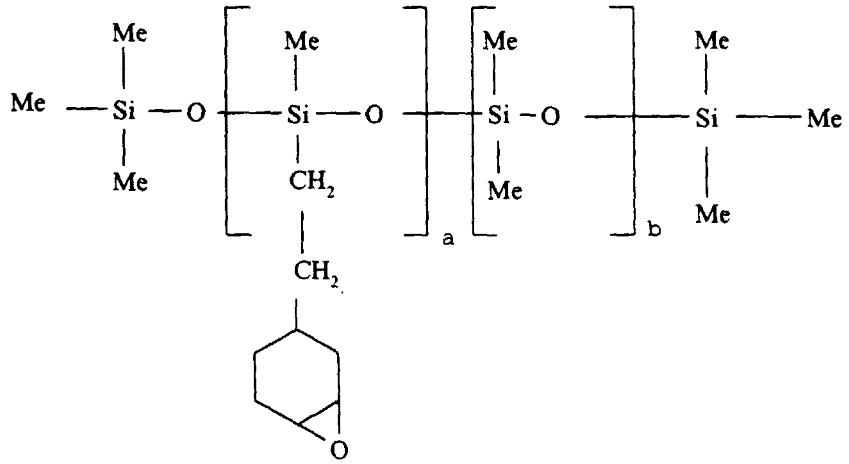

where a is about 7 and b is about 82 is added about 2.0 parts by parts by weight of tetrakis(pentafluorophenyl)borate tolylcumyliodonium in a 20 percent by weight solution in a diacetone alcohol solvent. This initiator is prepared in accordance with the general procedure described in European Patent Application Nos. 562 922 and 562 897. To the extent necessary for completion, the disclosures contained therein are expressly incorporated by reference. This mixture is agitated by hand for 30 minutes and the mixture is deposited at a coating weight of about 1.0-1.5 g/$m^2$ (0.6lb/3000 sq.ft.) onto a polyethylene terephthalate film having a thickness of about 2 mils using an offset Gravure coater.

The coated film is transported under an ultraviolet lamp, no electrodes, excitation by microwaves and a power of 120W/cm irradiated. After passing the coated substrate under the lamp at the rate of 32m/min, the irradiation energy is 0.025 J/$cm^2$ (measured with a Uvicure® cell from Eit-USA); the winding speed is 150 feet per minute.

The quality of the coating obtained after hardening is evaluated after having been placed in contact with the pressure sensitive adhesive tape (TESA 4970 Acrylic). The film liner is removed at a rate of 12 inches per minute. The release obtained is recorded in Table 2. The experiment is repeated with a separation rate of 600 inches per minute. To determine the Keil-aged properties of the composition, the above tests are repeated 20 hours after contact and at a storage temperature of about 70°C under a weighted pressure of 1 lb./sq. in. The results are shown in Table 3, as are the values for % Extractables and coefficient of friction.

Examples 2-15

The experiments of Comparative Example 1 are repeated except that a specified amount of a different epoxypolyorganosiloxane having a similar structure as shown in Example 1 but different molecular weight and percent epoxy values are added to the Silcolease PC-600. The properties of the second type of epoxypolyorganosiloxane is shown in

Table 1.

Table 1

| Additive | Percent Epoxy Groups | Molecular Weight | Viscosity (cP) |
|---|---|---|---|
| A | 2.77 | 17141 | 650 |
| B | 1.81 | 23956 | 1316 |
| C | 1.44 | 31070 | 2144 |
| D | 1.06 | 33237 | 2800 |
| E | 1.04 | 43314 | 4700 |
| F | 1.84 | 50382 | 7720 |
| G | 1.15 | 58632 | 3744 |
| H | 1.00 | | 2040 |
| I | 1.50 | | 2920 |

The Example compositions are compared by combining the following amounts of additives A-I to 100 parts of the epoxypolyorganosiloxane of Comparative Example 1. All amounts are by weight.

Table 2

| Example | Additive | Amount of Additive |
|---|---|---|
| 2 | C | 5 |
| 3 | C | 10 |
| 4 | C | 15 |
| 5 | G | 5 |
| 6 | G | 3 |
| 7 | G | 1 |
| 8 | E | 5 |
| 9 | E | 10 |
| 10 | B | 5 |
| 11 | B | 10 |
| 12 | D | 5 |
| 13 | D | 10 |
| 14 | F | 5 |
| 15 | F | 10 |
| 16 | H | 2.5 |
| 17 | H | 5 |
| 18 | I | 2.5 |
| 19 | I | 5 |

The tests of Comparative Example 1 are repeated with the Example 2-19 compositions. The results are shown in Table 3. The release is listed in grams per inch.

Table 3

| Example | 12"/min Initial | 12"/min Keil-Aged | 600"/min Initial | 600"/min Keil-Aged | % Extractables | Coef. Of Friction |
|---|---|---|---|---|---|---|
| Comparative 1 | 5.7 | 23.2 | 14.3 | 26.7 | 2.47 | 0.168 |
| 2 | 7.2 | 17.2 | 15.1 | 23.4 | 2.38 | 0.120 |
| 3 | 5.4 | 14.6 | 14.3 | 19.0 | 2.78 | 0.114 |
| 4 | 6.2 | 11.1 | 16.1 | 20.4 | 3.27 | 0.102 |
| 5 | 5.0 | 11.2 | 13.3 | 24.0 | 3.14 | 0.100 |
| 6 | 5.4 | 19.1 | 15.1 | 21.3 | 1.75 | 0.097 |
| 7 | 7.3 | 11.9 | 14.0 | 19.3 | 2.10 | 0.119 |
| 8 | 5.3 | 19.7 | 13.2 | 23.0 | 2.07 | 0.094 |
| 9 | 4.5 | 25.3 | 14.0 | 26.0 | 2.48 | 0.102 |
| 10 | 3.9 | 22.3 | 13.1 | 21.2 | 2.08 | 0.122 |
| 11 | 4.0 | 20.0 | 12.7 | 20.7 | 2.33 | 0.109 |
| 12 | 5.2 | 17.6 | 12.4 | 19.8 | 1.76 | 0.102 |
| 13 | 5.3 | 22.7 | 13.2 | 24.1 | 2.10 | 0.096 |
| 14 | 5.9 | 44.3 | 16.3 | 40.3 | 1.51 | 0.129 |
| 15 | 5.5 | 49.0 | 16.2 | 43.3 | 1.67 | 0.124 |
| 16 | 6.0 | 6.1 | 15.0 | 14.8 | 2.36 | 0.102 |
| 17 | 6.3 | 5.4 | 14.6 | 14.6 | 2.31 | 0.092 |
| 18 | 5.4 | 24.8 | 13.4 | 25.6 | 2.19 | 0.118 |
| 19 | 5.5 | 26.1 | 11.3 | 22.8 | 2.06 | 0.106 |

Several qualitative tests are performed on the different compositions. These tests include Rub Off (conducted both immediately after coating and after 24 hours storage at room temperature), Loop Tack Migration (conducted both immediately after coating and after 24 hours storage at room temperature), and Water Based Marker

(conducted both immediately after coating and after 24 hours storage at room temperature). The testing is done on a subjective scale of 0 to 5, with 0 being the worst possible performance and 5 being the best performance achievable. The results are shown in Table 4.

Table 4

| Formulation | Coatweight (lb/Ream) | Rub Off immed. / 24h* | Loop Tack Migration immed. / 24h* | Water Based Marker immed. / 24h* | Total immed. / 24h* |
|---|---|---|---|---|---|
| Comp. Ex. 1 | 1.09 | 5/5 | 3/4+ | 2/3 | 10/12+ |
| Example 2 | 1.03 | 5/5 | 3/2+ | ½ | 9/9+ |
| Example 5 | 1.06 | 5/5 | 3/2+ | 1/1 | 9/8+ |
| Example 8 | 0.99 | 5/5 | 3-/2 | ½ | 9-/9 |
| Example 10 | 0.96 | 5/5 | 3/3 | 1/3- | 9/11- |
| Example 12 | 1.2 | 5/5 | 2+/2+ | 1/1 | 8+/8+ |
| Example 14 | 1.25 | 5/5 | 4-/4 | 3/3 | 12-/12 |
| Example 17 | 0.86 | 5/5 | ¾ | 3/3 | 11/12 |
| Example 18 | 0.64 | 5/5 | 4/4 | 4-/4 | 13-/13 |

The above Examples demonstrate the unexpectedly superior properties, particularly reduced friction, when using the blend composition of the present invention.

Having described the invention in detail and by reference to the preferred embodiments thereof, it will be apparent that modifications and variations are possible without departing from the scope of the appended claims.

## Claims

1. A composition of matter comprising:

   (a) 100 parts by weight of a curable epoxypolyorganosiloxane having an epoxy content of between about 8 to about 15 percent and a molecular weight of between about 4000 to about 50000 daltons;

   (b) 0.1 to 20 parts by weight of curable epoxypolyorganosiloxane having an epoxy content of between about 0.5 to about 3.0 percent and a molecular weight of between about 20000 to about 80000 daltons; and

   (c) 0.1 to 5 parts by weight of a curing agent, which, upon exposure to actinic radiation is capable of curing components (a) and (b);

   wherein said composition demonstrates surface release properties when coated and cured onto a substrate.

2. The composition according to claim 1 wherein said curable epoxypolyorganosiloxanes of components (a) and (b) comprise a linear or a substantially linear polymer of recurring structural units of formula (I) and endgroups of formula (II), or are cyclic and comprise recurring structural units of formula (I)

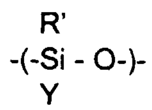 (I)

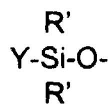 (II)

in which formulae the symbols R', which may be identical or different, are each a $C_1$-$C_6$ linear or branched alkyl radical, a $C_5$-$C_8$ cycloalkyl radical, an aryl radical, or a substituted aryl radical, at least 60 molar % of the radicals R' being methyl radicals; and the symbols Y which may be identical or different, are each a group as defined by R' or a cationically crosslinkable functional organic radical being bonded to an atom of the silicone chain via a divalent

bridge having from 2 to 20 carbon atoms; with the proviso that at least one of the symbols Y is a crosslinkable functional epoxy containing organic radical.

**3.** The composition according to claim 1 wherein said curable epoxypolyorganosiloxanes of components (a) and (b) are of the formula:

$$R_2R^2SiO(RR^1SiO)_x(R_2SiO)_y(RHSiO)_zSiR^2R_2$$

wherein R is individually a lower alkyl radical having from 1 to about 8 carbon atoms; $R^1$ individually is a monovalent cycloaliphatic epoxy-functional organic radical having from 2 to about 20 carbon atoms; $R^2$ is individually a lower alkyl radical having from 1 to about 8 carbon atoms or a monovalent cycloaliphatic epoxy-functional organic radical having from 2 to about 20 carbon atoms; x is a number ranging from about 1 to about 50; y is a number ranging from about 1 to about 1000; and z is a number ranging from about 0 to about 5.

**4.** The composition according to claim 3 wherein, for component (a), each R represents a methyl group, $R^1$ represents a β-(3,4-epoxycyclohexyl)ethyl group, each $R^2$ represents a methyl group, x is a number between about 1 and about 10; y is a number between about 20 and about 150; and z is a number between about 0 and about 2.

**5.** The composition according to claim 4 wherein x is between about 3 and 9, y is between about 100 and 150 and z is 0.

**6.** The composition according to claim 1 wherein the said curing agent comprises an onium salt.

**7.** The composition according to claim 6 wherein said onium salt comprises a catalytically effective amount of an onium borate of an element selected from among Groups 15 to 17 of the Periodic Table; the cationic moiety of said onium borate being selected from the group consisting of:

(1) onium salts having the formula (IV):

$$[(R')_n\text{-}A\text{-}(R'')_m]^+ \quad (IV)$$

in which formula (IV) A is an element selected from the group consisting of I, S, Se, P and N; R' is a $C_6$-$C_{20}$ heterocyclic radical containing at least one heteroelements heterocyclic or a carbocyclic aryl radical; R'' is a $C_6$-$C_{20}$ heterocyclic radical containing at least one heteroelement or a carbocyclic aryl radical or a linear or branched $C_1$-$C_{30}$ alkenyl or alkyl radical, said radicals R' and R'' optionally being substituted by a $C_1$-$C_{25}$ alkoxy, C1-C25 alkyl, nitro, chloro, bromo, cyano, carboxyl or mercapto group; n is an integer ranging from 1 to v + 1, with v being the valence of the element A; and m is an integer ranging from 0 to v-1 with $n + m = v + 1$; and

(2) oxoisothiochromanium salts of the following formula:

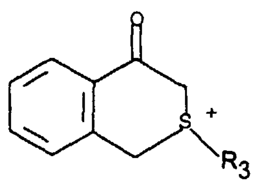

wherein in the oxoisothiocromamium salt formula $R_3$ represents a linear or branched alkyl group containing between 1 and about 20 carbon atoms or an aryl group;
and wherein the anionic borate moiety is of the formula:

$$[BX_aR^v{}_b]^-$$

which a and b are integers ranging from 0 to 4 with $a + b = 4$; X each represents a halogen atom when a = 0 to 3, or an OH functional group when a = 0 to 2; and each $R^v$ is a phenyl radical substituted by at least one electron-withdrawing group or by at least two halogen atoms, or an aryl radical containing at least two aromatic

ring members which are optionally substituted by at least one electron-withdrawing element or group.

**8.** The composition according to claim 7 wherein said onium salt is selected from the group consisting of $[(\Phi\text{-}CH_3)_2 I]^+[B(C_6F_5)_4]^-$; $[(\Phi)_2 I]^+[B(C_6F_5)_4]^-$; $[C_{12}H_{25}\text{-}\Phi\text{-}I\text{-}\Phi]^+[B(C_6F_5)_4]^-$; $[(C_8H_{17}\text{-}O\text{-}\Phi\text{-}I\text{-}\Phi]^+[B(C_6F_5)_4]^-$; $[(C_8H_{17}\text{-}O\text{-}\Phi)_2 I]^+[B(C_6F_5)_4]^-$; $[(\Phi)_2 I]^+[B(C_6H_3(CF_3)_2)_4]^-$; $[(\Phi)_2S\text{-}\Phi\text{-}O\text{-}C_8H_{17}]^+[B(C_6H_4CF_3)_4]^-$; $[(C_{12}H_{25}\text{-}\Phi)_2I]^+[B(C_6F_5)_4]^-$; $[CH_3\text{-}\Phi\text{-}I\text{-}\Phi\text{-}CH(CH_3)_2]^+[B(C_6F_5)_4]^-$; $[(\Phi)_3 S]^+[B(C_6F_5)_4]^-$; $[CH_3\text{-}\Phi\text{-}I\text{-}\Phi\text{-}CH(CH_3)_2]^+[B(C_6H_4OCF_3)_4]^-$; and $2[B(C_6F_5)_4]^- [(\Phi)_2S\text{-}\Phi\text{-}S\text{-}\Phi\text{-}S(\Phi)_2]^{+2}$ wherein $\phi$ represents a phenyl group.

**9.** The composition according to claim 1 further comprising an additive selected from the group consisting of adherence modulators, pigments, photosensitizing agents, fungicides, bactericides, stabilizers, antimicrobial agents, corrosion inhibitors and mixtures thereof.

**10.** The composition according to claim 1 wherein component (a) comprises between about 90 and about 99 percent by weight of the composition; component (b) comprises between about 1 and about 10 percent by weight of the composition; and component (c) comprises between about 0.2 and about 2.0 percent by weight of the composition.

**11.** A process for rendering a surface abherent comprising the steps of:

(1) coating onto a surface of a substrate a composition of matter comprising:

(a) 100 parts by weight of a curable epoxypolyorganosiloxane having an epoxy content of between about 8 to about 15 percent and a molecular weight of between about 4000 to about 50000 daltons;

(b) 0.1 to 20 parts by weight of curable epoxypolyorganosiloxane having an epoxy content of between about 0.5 to about 3.0 percent and a molecular weight of between about 20000 to about 80000 daltons; and

(c) about 0.1 to about 5 parts by weight of an curing agent, which, upon exposure to actinic radiation is capable of curing components (a) and (b); and

(2) exposing said surface to actinic radiation for a time period necessary to effectuate curing of components (a) and (b) onto said surface.

**12.** The process according to claim 11 wherein said actinic radiation comprises ultraviolet radiation.

**13.** An article of manufacture comprising a substrate having one or more release surfaces, said one or more release surfaces being formed by:

(1) coating onto said one or more surfaces of said substrate a composition of matter comprising:

(a) 100 parts by weight of a curable epoxypolyorganosiloxane having an epoxy content of between about 8 to about 15 percent and a molecular weight of between about 4000 to about 50000 daltons;

(b) 0.1 to 20 parts by weight of curable epoxypolyorganosiloxane having an epoxy content of between about 0.5 to about 3.0 percent and a molecular weight of between about 20000 to about 80000 daltons; and

(c) about 0.1 to about 5 parts by weight of an curing agent, which, upon exposure to actinic radiation is capable of curing components (a) and (b); and

(2) exposing said surface to actinic radiation for a time period necessary to effectuate curing of components (a) and (b) onto said surface.

**14.** The article according to claim 13 wherein said article is selected from the group consisting of single or double coated release liners for tapes, labels or personal care items, embossing strip release liners, protective release surfaces for floor tiles and wall coatings, release papers for low pressure plastic laminates, release materials for interleaves, release materials for self-sealing roofing and bakery tray liners.